Europäisches Patentamt

European Patent Office

Office européen des brevets

(19)

(11)  **EP 1 608 084 A2**

(12)  # EUROPEAN PATENT APPLICATION

(43)  Date of publication:
      **21.12.2005 Bulletin 2005/51**

(51)  Int Cl.⁷: **H04B 7/08**

(21)  Application number: **04025404.7**

(22)  Date of filing: **26.10.2004**

(84)  Designated Contracting States:
      **AT BE BG CH CY CZ DE DK EE ES FI FR GB GR
      HU IE IT LI LU MC NL PL PT RO SE SI SK TR**
      Designated Extension States:
      **AL HR LT LV MK**

(30)  Priority:  **15.06.2004  JP 2004176934**

(71)  Applicant: **FUJITSU LIMITED
      Kawasaki-shi, Kanagawa 211-8588 (JP)**

(72)  Inventor: **Yokoyama, Hitoshi, Fujitsu Limited
      Kawasaki-shi, Kanagawa 211-8588 (JP)**

(74)  Representative: **HOFFMANN EITLE
      Patent- und Rechtsanwälte
      Arabellastrasse 4
      81925 München (DE)**

(54)  **Method and apparatus for performing adaptive control of beam forming**

(57)    In a beam forming adaptive control method, a signal of each mobile station is separated from a set of signals received at a sector antenna from multiple mobile stations. The signals are transmitted in a code division multiple access scheme. The direction of arrival and the received power level of each path of the separated signals is calculated for each of the mobile stations. Then, spatial signal power level immediately before the signal is received at the antennas is estimated from the received power levels, based on the respective direction of arrival and sector antenna gain. Finally, the direction of the beam to be transmitted is determined based on the estimated spatial signal power level.

FIG.3

**Description**

BACKGROUND OF THE INVENTION

1. Field of the Invention

The present invention generally relates to a Code Division Multiple Access (CDMA) cellular mobile communications technique, and more particularly, to digital beam forming applied to an adaptive array of directional sector antennas.

2. Description of the Related Art

In general, cellular mobile communications systems operate in a multi-path environment.

An uplink multi-path signal (from a mobile station to a base station) is received at the base station from different direction of arrival (DoA), with different time delay, and under different fading effect, due to scattering, diffraction, reflection, or other factors. With a Time Division Duplex (TDD) scheme, a reversible channel may be established on downlink from the base station to the mobile station because the same frequency is used for uplink and downlink in TDD wireless communications. With a Frequency Division Duplex (FDD) scheme, adjacent frequency channels are irreversible with respect to instantaneous fading, but are reversible with respect to the change in direction of arrival of multiple paths because of slow change over time, as compared with fading.

Signals received at the base station contain pilot signal known in advance, and a Minimum Mean Square Error (MMSE) algorithm is employed to minimize the mean squire error between the pilot signal and the noise-added pilot signal having been subjected to interference. Using this algorithm, the phase and the amplitude of the signal are controlled, and interference waves are suppressed by making beam formation.

On the other hand, downlink beam formation can be controlled by detecting the direction of arrival of a desired uplink signal and by forming a main beam in the detected direction. The direction of arrival of an uplink signal can be determined using a conventional MUSIC (Multiple Signal Classification) algorithm. The desired channel can be distinguished from interference waves by making use of correlation of a unique sequence of codes given to each user.

At the receiving end of the desired channel, the signal to interference power ratio (SIR) can be improved by spatially separating interference waves from the desired channel. On the other hand, it is desired at the transmitting end of the channel to concentrate the transmission energy of the signal on space with a satisfactory propagation environment, taking into account the antenna gain estimated from the received signal, in order to efficiently control the transmit power.

However, a directional sector antenna has a tendency for an optimum channel to be established in a direction having a greater antenna gain when transmitting signals. For this reason, the power distribution radiated from the antenna becomes spatially non-uniform, being biased toward a direction with a high user density or a high antenna gain. The undesirable power concentration causes a high interference spot and local degradation at that spot, and the throughput is reduced.

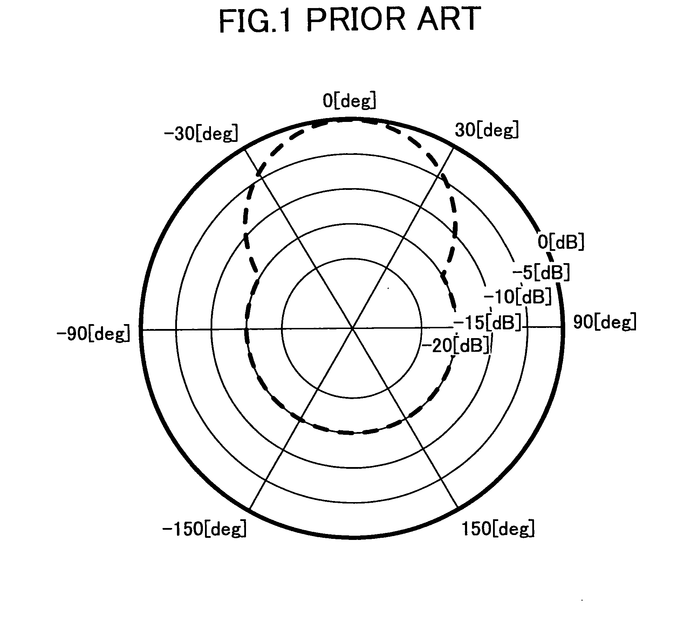

FIG. 1 is a schematic diagram illustrating the gain characteristic of a conventional sector antenna. This diagram is created based on the model of a directional sector antenna of 2-beam (or 2-path), 60-degree half beamwidth, as described in the IEICE (Institute of Electronic, Information and Communication Engineers) Spring Conference Report, B-110, 1993. In FIG. 1, the 60-degree half beamwidth area with a front-to-back ratio of 15 dB is defined by the dashed line.

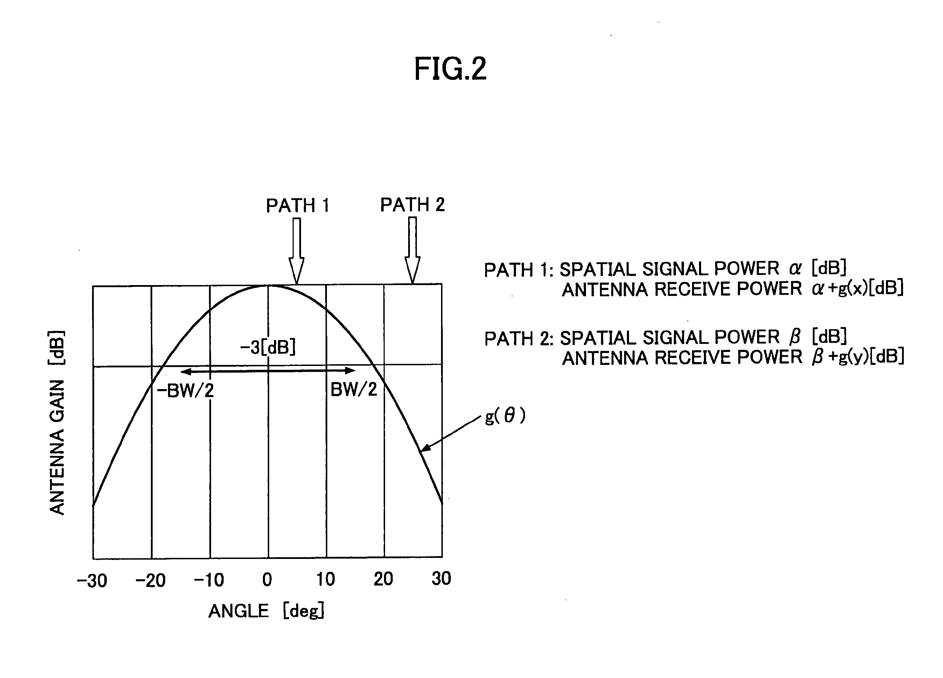

FIG. 2 is a diagram illustrating an example of the signal-receive condition of the conventional 2-path, 60-degree sector antennal with the half beamwidth BW. It is assumed in this diagram that signals are received at the directional sector antenna of half beamwidth BW from two paths for a certain user. For Path 1, the spatial signal power prior to being received at the antenna is $\alpha$ dB. The receive power at the antenna is $\alpha+g(x)$ [dB]. For Path 2, the spatial signal power is $\beta$ dB, and the receive power at the antenna is $\beta+g(y)$ [dB]. The functions $g(x)$ and $g(y)$ represent the antenna gains at angles x and y, respectively.

If the spatial signal power $\beta$ of Path 2 is slightly higher than the spatial signal power $\alpha$ of Path 1 ($\alpha<\beta$), and if the antenna gain of Path 1 is greater than that of Path 2 ($g(x)>g(y)$), the receive power at antenna 1 may become higher than that of antenna 2 ($\alpha+g(x)>\beta+g(y)$). When the difference between the antenna gains is greater than the difference between the spatial signal power levels of the two paths, the situation where the path of the greatest spatial signal power is not selected as the optimum path may occur. This situation is likely to occur when the directivity gain of the directional sector antenna is steep, that is, when the antenna half beamwidth is narrow.

It is proposed to narrow the half beamwidth for both uplink and downlink for the purpose of reducing interference due to leakage between adjacent sectors of the sector antenna. See the IEICE general conference Report, B-5-157, 1999. In addition, it is supposed that a typical W-CDMA (Wideband Code Division Multiple Access) system has a variance of about plus or minus five degrees, with respect to the median, in the direction of arrival among paths. Accordingly, the antenna gain difference between those paths of different directions of arrival cannot be neglected when the half beamwidth of the sector antenna becomes narrow.

From the above discussion, it appears to be difficult to choose the maximum spatial power path as the optimum channel. This means that it becomes more difficult to prevent reduction of the throughput due to local degradation of spots.

For the downlink beam formation, a null steering technique is proposed; however, no consideration is made on optimization of transmit direction for the main beam.

## SUMMARY OF THE INVENTION

Therefore, it is an object of the invention to provide an adaptive control technique for beam formation of a directional sector antenna, which can prevent reduction of the user throughput per sector.

To achieve the object, in one aspect of the invention, a beam forming adaptive control method comprises the steps of:

(a) receiving signals at a plurality of sector antennas from a plurality of mobile stations and separating each of the signals for each of the mobile stations, the signals being transmitted in a code division multiple access scheme;
(b) estimating direction of arrival and the received power level of each path of the separated signals;
(c) estimating spatial signal power level from the received power level based on the respective direction of arrival; and
(d) determining a direction of beam to be transmitted based on the estimated spatial signal power levels.

The estimation of the spatial signal power level immediately before a signal is received at the sector antenna may be conducted in response to a mode switching instruction supplied externally or internally.

In another aspect of the invention, a beam forming adaptive control apparatus is provided. The apparatus comprises:

(a) a plurality of sector antennas configured to receive signals from a plurality of mobile stations transmitted in a code division multiple access scheme;
(b) a signal separator configured to separate each of the signals for each of the mobile stations;
(c) a first computing unit configured to calculate directions of arrival and received power levels from the separated signals;
(d) a second computing unit configured to calculate spatial signal power level from the received power level based on the associated direction of arrival of each path; and
(e) a beam direction determining unit configured to determine a direction of beam to be transmitted based on the spatial signal power.

## BRIEF DESCRIPTION OF THE DRAWINGS

Other objects, features, and advantages of the present invention will become more apparent from the following detailed description when read in conjunction with the accompanying drawings, in which:

FIG. 1 is a schematic diagram illustrating an example of the gain characteristic of a conventional sector antenna;
FIG. 2 is a diagram illustrating an example of the signal-receive condition of a conventional 60-degree sector antenna;
FIG. 3 is a block diagram of a beam forming adaptive control apparatus according to the first embodiment of the invention;
FIG. 4 is a diagram illustrating the signal power distribution of a 60-degree sector antenna operating in the transmit power reduction mode;
FIG. 5A is a diagram illustrating the signal power distribution of a 60-degree sector antenna operating in the user throughput increase mode in the first embodiment of the invention, and FIG. 5B is a diagram illustrating the signal power distribution of the 60-degree sector antenna operating under optimization control according to the second embodiment of the invention;
FIG. 6 is a block diagram of a beam forming adaptive control apparatus according to the second embodiment of the invention;
FIG. 7 illustrates a spatial distribution of the accumulative radiated powers according to an embodiment of the invention;

FIG. 8 is a graph illustrating an evaluation using a histogram of radiated power in each direction of the sector antenna;

FIG. 9 is a flowchart of the operations carried out by the optimization control unit 141 according to an embodiment of the invention; and

FIG. 10 is a flowchart of another example of the operations carried out by the optimization control unit 141.

DETAILED DESCRIPTION OF THE PREFERED EMBODIMENTS

The preferred embodiments of the present invention are now described below with reference to the attached drawings.

First, the concept of the present invention is explained. With the present invention, when a signal, which contains both the desired signal component and an interference component, is received at an antenna, the spatial characteristics of the signal immediately before it is received at the antenna are estimated from the received signals. Based on the estimated spatial signal characteristics, the direction of the main beam to be transmitted is controlled such that the transmit power becomes spatially uniform over the sector.

This is because the spatial power distribution (or the DoA distribution) is substantially uniform from the user statistics when users exist uniformly in the sector. In contrast, the maximum power path DoA distribution at the antenna end is biased to a direction with a high directivity gain under the influence of the antenna directivity gain. Therefore, in the invention, the spatial signal power is estimated from the received signal power by canceling the antenna gain component to determine a beam direction to be transmitted under the uniform conditions.

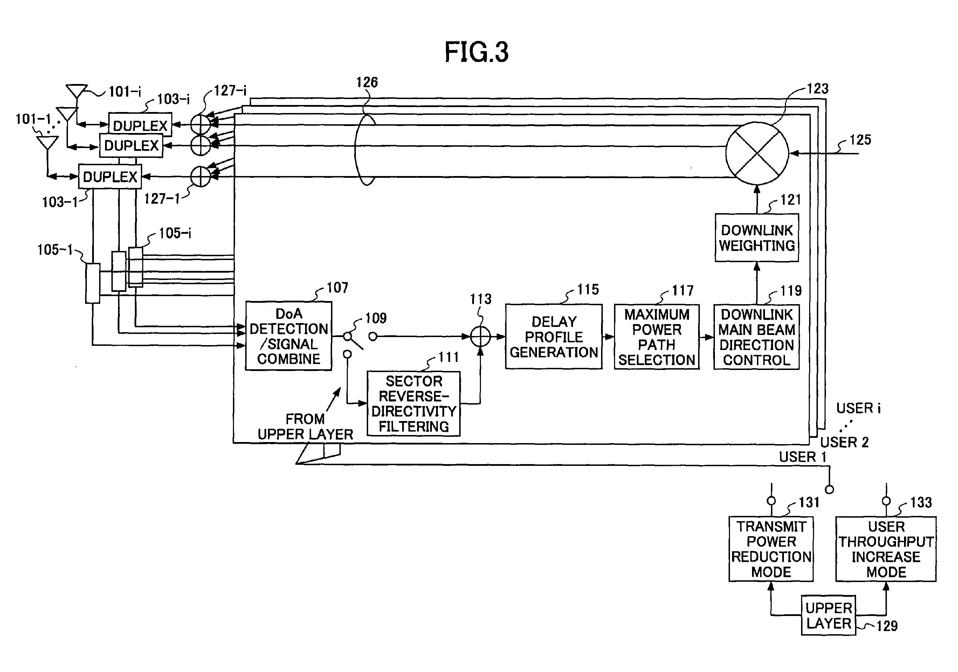

FIG. 3 is a schematic diagram of a beam-forming adaptive control apparatus according to the first embodiment of the invention. The beam-forming adaptive control apparatus includes antennas 101-1 through 101-i, duplexers 103-1 through 103-i for isolating transmitters from a receivers, user separators 105-1 through 105-i, a DoA (direction of arrival) detection/signal combining unit 107, a mode switch 109, a sector reverse-directivity filter 111, an adder 113, a delay profile generator 115, a maximum power path selector 117, a downlink main beam direction control unit 119, a downlink weighting unit 121, a multiplier 123, and user multiplexing units 127-1 through 127-i.

A signal processing section that comprises the DoA detection/signal combining unit 107, the mode switch 109, the sector reverse-directivity filtering unit 111, the adder 113, the delay profile generator 115, the maximum power path selector 117, the downlink main beam direction control unit 119, the downlink weighting unit 121, the multiplier 123, and the associated user multiplexing unit 127 is provided for each of the users 1 through i. (In FIG. 3, only the section corresponding to the user 1 is depicted for the sake of convenience).

Each of the antennas 101-1 through 101-i transmits and receives data, which are transmitted between mobile stations (not shown) in the CDMA mobile communications system. In the first embodiment, each antenna 101 is an adaptive array directional sector antenna with half beamwidth of 60 degrees.

Each of the duplexers 103-1 through 103-i switches between the transmit mode and receive mode for one of the antennas 101-1 through 101-i. To be more precise, the duplexer 103 supplies the received signal to the associated user separator 105 in the receive mode. In the transmit mode, the duplexer 103 passes the output of the associated user multiplexing unit 127 to the associated antenna 101.

Each of the user separators 105-1 through 105-i separates a user signal from the signal received at the associated antenna 101, by making use of the correlation of the unique sequence of codes given to each user. As has been described above, each of the user separators 105-1 through 105-i is provided corresponding to one of the duplexers 103-1 through 103-i.

The DoA detection/signal combining unit 107 detects the direction of arrival of the signal for each user, and performs in-phase combination on the signals received at the respective antennas 101 using the detected direction of arrival. In the example shown in FIG. 3, the DoA detection/signal combining unit 107 receives the signal for user 1 separated by the user separators 105-1 through 105i, and applies the MUSIC algorithm or another suitable algorithm to detect the direction of arrival. Then, based on the detected direction of arrival, the product of the antenna gain $g(\theta)$ and the spatial signal power $P(t)$ before the reception at the antenna is estimated, where $\theta$ is the direction of arrival. This product is expressed as $g(\theta)+P(t)$ [dB] and represents the receive power at the antenna. The DoA detection/signal synthesizing unit 107 then outputs the antenna receive power $g(\theta) +P(t)$ [dB] and the direction of arrival.

The mode switch 109 switches between the adder 113 and the sector reverse-directivity filtering unit 111, based on an instruction from an upper layer 129, so as to connect the output (containing antenna receive power and the direction of arrival) of the DoA detection/signal combining unit 107 to either the adder 113 or the sector reverse-directivity filtering unit 111. In this embodiment, when the mode switch 109 is connected to the adder 113, a transmit power reduction mode 131 for giving the priority to power saving is selected. On the other hand, when the mode switch 109 is connected to the sector reverse-directivity filtering unit 111, a user throughput increase mode 133 for giving the priority to increasing the user throughput per sector is selected.

The upper layer 129 is, for example, a radio network controller (RNC), which is provided corresponding to each base station or covering several base stations. The upper layer 129 monitors the traffic conditions between the associated base station and the mobile stations located in the area of the base station. The traffic conditions include, for example, the throughput per cell, and the throughput per sector of the antenna of the base station. By monitoring the traffic conditions, the upper layer 129 selects either the transmit power reduction mode 131 or the throughput increase mode 133, and instructs the mode switch 109 to select either the adder 113 or the sector reverse-directivity filtering unit 111, respectively.

The sector reverse-directivity filtering unit 111 removes the antenna gain component $g(\theta)$ from the antenna receiver power to produce the spatial signal power P(t), based on the DoA information. The spatial signal power P(t) represents the power of the signal propagating through the air before it is received at the antenna. The sector reverse-directivity filtering unit 111 has a conversion table that records the directions of arrival in association with the reverse patterns of the corresponding antenna gains.

To be more precise, upon receiving the direction of arrival and the antenna receive power $(g(\theta)+P(t)[dB])$ of each path from the DoA detection/signal combining unit 107, the sector reverse-directivity filtering unit 111 searches for the reverse pattern of the antenna gain associated with this direction of arrival in the conversion table. Then, the sector reverse-directivity filtering unit 111 cancels the antenna gain component $g(\theta)$ from the power of the signal received at the antenna end using the reverse pattern. The resultant power level (i.e., spatial signal power P(t)) and the associated detected direction of arrival are output to the adder 113.

The delay profile generator 115 produces and outputs a delay profile, which describes signal powers and the directions of arrival of the prescribed number of paths, for example, i paths in this embodiment. In the embodiment, the number of paths in the received signal happens to be the same as the number of users located; however, these two are not necessarily consistent with each other.

When the transmit power reduction mode 131 is selected by the upper layer 129, the delay profile generator 115 receives the directions of arrival and the antenna receive powers directly from the DoA detection/signal combining unit 107, and produces and outputs a delay profile describing the relation between the directions of arrival and the antenna receive powers of the path 1 through path i. When the throughput increase mode 133 is selected by the upper layer 129, the delay profile generator 115 receives the directions of arrival and the spatial signal powers from the sector reverse-directivity filtering unit 111, and produces and outputs a delay profile describing the relation between the directions of arrival and the spatial signal powers of the path 1 through path i.

The maximum power path selector 117 selects the path that has the highest signal power (referred to as the "maximum power path"). In this embodiment, the maximum power selector 117 selects the maximum power path based on the directions of arrival and the spatial signal powers (or the antenna receive powers) of the path 1 through path i supplied from the delay profile generator 115.

The downlink main beam direction control unit 119 determines the direction of the beam to be transmitted for user 1, based on the direction of arrival of the maximum power path selected by the maximum power path selector 117. The downlink weighting unit 121 produces weighting parameters for adjusting the phases of the antennas 101-1 through 101-i. In this embodiment, the downlink weighting unit 121 produces the weighting parameters for the antennas 101-1 through 101-i based on an instruction from the downlink main beam direction control unit 119.

The multiplier 123 multiplies the data 125 to be transmitted by each of the weighting parameters produced by the downlink weighting unit 121, and supplies the weighted data 126 to the respective antennas 101-1 through 101-i. Each of the user multiplexing units 127-1 through 127-i is provided corresponding to one of the duplexers 103-1 through 103-i to combine the weighted data of users 1 through i for the associated antenna 101. The combined data are supplied to the associated antenna 101.

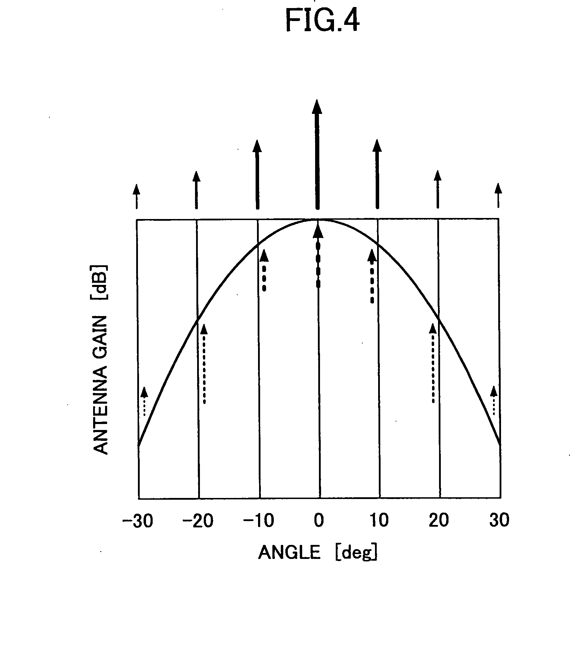

FIG. 4 illustrates an example of the distribution of the signal power of a 60-degree sector antenna in the transmit power reduction mode. In this drawing, the dashed arrows represent the signal powers at the end portions of the antennas, the length of the dashed arrow represents the power density, and the thickness of the dashed line represents the user density. Similarly, the solid arrows represent the spatial signal powers radiated from the antennas, the length of the solid arrow represents the power density, and the line thickness represents the user density.

The distribution depicted in FIG. 4 shows the direction of the main beam to be transmitted, which is determined based on the DoA information and the signal power received at the antenna. The signal power at the end of the antenna becomes the highest in the direction with the greatest antenna gain, that is, the direction of angle 0 degrees. Consequently, the spatial signal power radiated from the antenna in this direction also becomes the greatest, and the user density is high. If the number of users accommodated in a sector is not so large, the optimum channel can be selected taking the antenna gain of the directional antenna into account, and the transmit power can be reduced.

On the other hand, if the number of users accommodated in a sector increases, the user density becomes high in the direction of the greater antenna gain. In this case, interference among users, as well as degradation of a local spot, is likely to occur. Furthermore, the signal to interference and noise ratio (SINR) is likely to be degraded in that direction when transmitting data. The degradation of the SINR requires transmit power control, which may further increase interference.

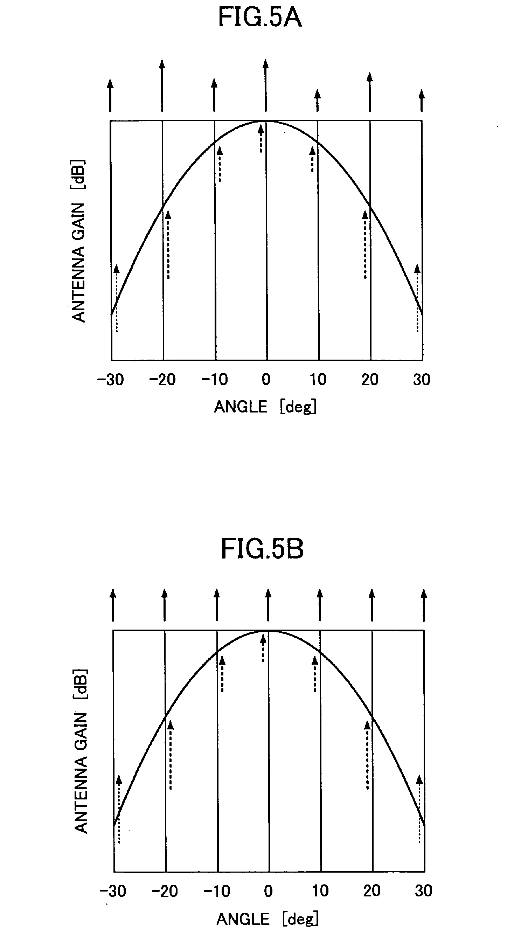

FIG. 5A illustrates an example of the signal power distribution of a 60-degree sector antenna in the throughput increase mode. FIG. 5B illustrates an improved signal power distribution of the same sector antenna operating under optimization control, which will be described in the second embodiment. The dashed arrows, the solid arrows, the lengths of the arrows, and the thickness of the lines indicate the same parameters as those shown in FIG. 4.

The distribution depicted in FIG. 5A shows the direction of the main beam to be transmitted, which is determined based on the DoA information and the signal power received at the antenna.

The major difference from the distribution shown in FIG. 4 is that the desired transmit direction of the user data has a substantially uniform distribution. The antenna transmit power at the end of the antenna becomes greater in the direction with less antenna gain, and consequently, the transmit power per sector increases.

However, the spatial signal power radiated from the antenna under the above-described transmit power distribution has much less variation, as compared with that shown in FIG. 4. This is clearly shown by the lengths of the solid arrows.

In the first embodiment, by controlling the beam direction so as to cause the user density to become more uniform with respect to the transmit direction, the variation in the radiated power density can be reduced. Consequently, user interference and degradation of local spots can be reduced adaptively. This arrangement is realized by selecting the maximum power path focusing on the spatial signal power through cancellation of the antenna gain component at the sector reverse-directivity filtering unit 111, and by appropriately weighting the data to be transmitted according to the selected path.

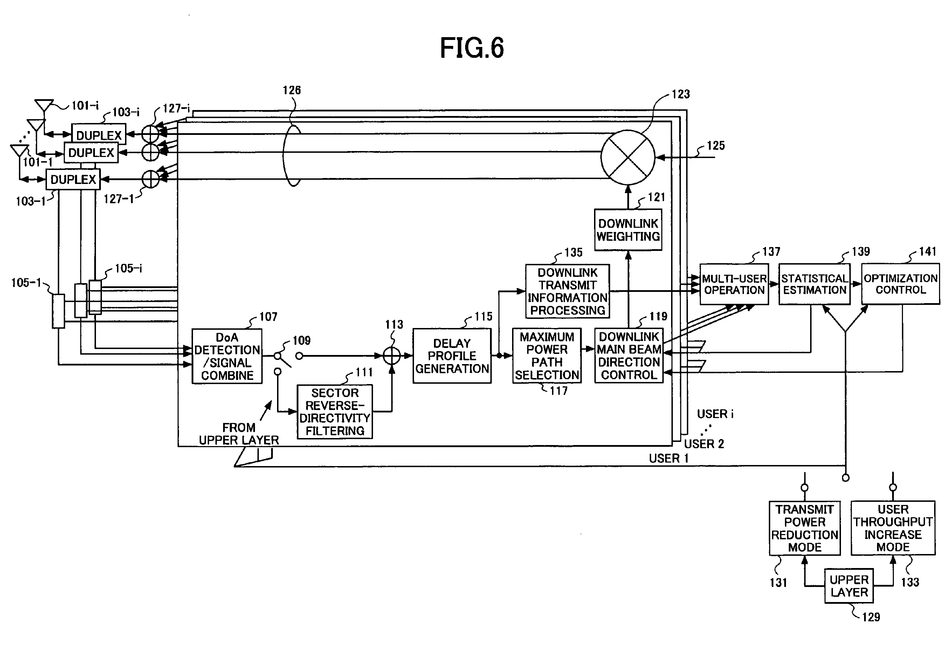

FIG. 6 is a block diagram of a beam forming adaptive control apparatus according to the second embodiment of the invention. In the second embodiment, transmit power is estimated for each user through an optimization process, based on the uplink propagation information and downlink transmit information. The elements performing substantially the same functions as those shown in FIG. 3 of the first embodiment are denoted by the same numerical references, and explanation for them is omitted.

The beam forming adaptive control apparatus of the second embodiment further includes a downlink transmit information processing unit 135, a multi-user operation unit 137, a statistical estimation unit 139, and an optimization control unit 141, in addition to the elements shown in FIG. 3. In the second embodiment, the components other than the downlink transmit information processing unit 135 are provided in common for all the users (user 1 through user i) accommodated in the base station.

When the user throughput increase mode 133 for giving the priority to increasing the user throughput is selected, the downlink transmit information processing unit 135 calculates a needed power level to be radiated from the antenna (expressed by equation 1, which is described below) for each of the paths 1 through i of user 1 provided that each path only is used by making beamforming. This calculation is carried out using the directions of arrival and sector antenna gain and the spatial signal powers of paths 1 through i of user 1 supplied from the delay profile generator 115, as well as on the downlink transmit information stored for each user. In the second embodiment, the downlink transmit information consists of a set of parameter values representing the transmission scheme, the transmission rate, and other factors, and is stored in the downlink transmit processing unit 135 in advance. The calculated power level to be radiated (referred to as "radiated power level") is supplied to the multi-user operation unit 137.

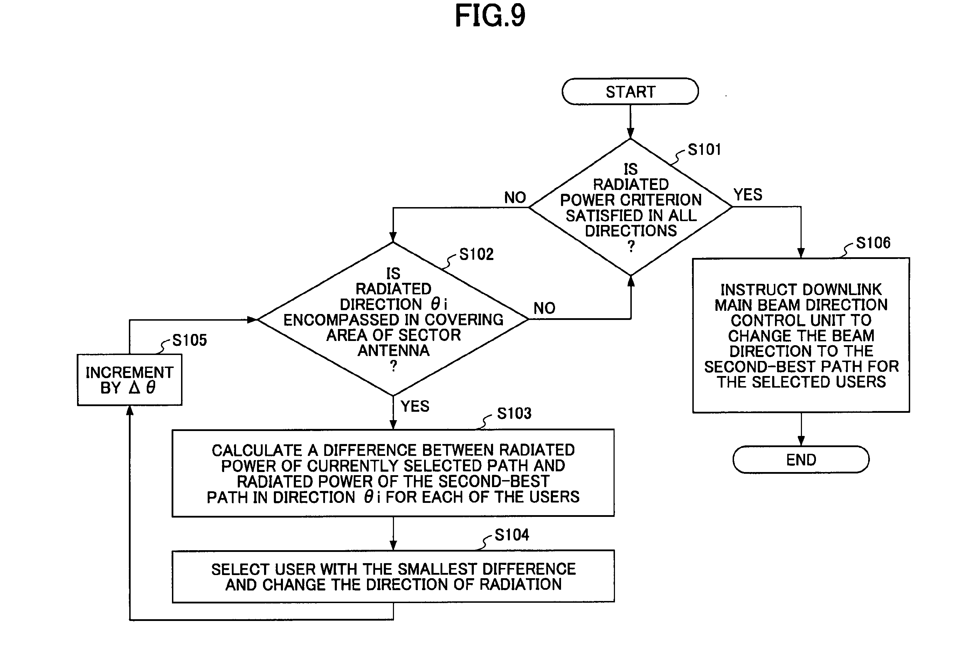

The multi-user operation unit 137 also receives a path number selected by the downlink main beam direction control unit 119 for each of the users 1 through i. The selected path number is used when accumulating the radiated power levels for all the users, as is described below. The selected path number is also used in the optimization control unit 141 (for example, in step S103 shown in FIG. 9).

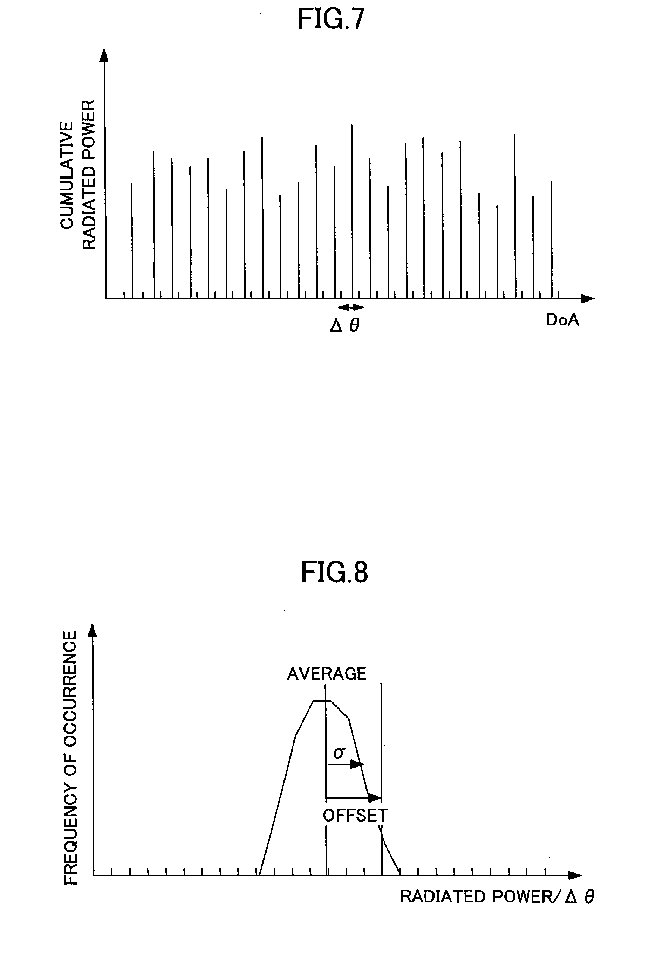

The multi-user operation unit 137 estimates a cumulative radiated power distribution over a sector by a prescribed stepsize $\Delta\theta$ in the transmit direction (that is, in the direction of arrival), as illustrated in FIG. 7. In the second embodiment, the radiated power level of the path designated by the downlink main beam direction control unit 119 is accumulated for all the users, using the multi-path radiated power information calculated for each user by the downlink transmit information processing unit 135. The statistical estimation unit 139 estimates a radiated power distribution for each direction, as shown in FIG. 8, based on the cumulative radiated power distribution obtained by the multi-user operation unit 137. In this embodiment, the statistical estimation unit 139 further calculates statistical values using equations 2 and 3, from the radiated power distribution or the histogram of FIG. 8. Based on the radiated power distribution of each direction, it is determined whether optimization of user distribution in the sector or beam direction adjustment is required.

The optimization control unit 141 executes an algorithm for optimizing the user allocation based on the estimation result of the statistical estimation unit 139. In this embodiment, the optimization control unit 141 supplies a beam direction changing instruction, which is the execution result of the optimization algorithm, to the downlink main beam direction control unit 119.

The operations of the beam forming adaptive control apparatus are described below in conjunction with FIG. 6 through FIG. 10.

First, the mode switch 109 is connected to the sector reverse-directivity filtering unit 111 in response to an instruction from the upper layer 129. Consequently, the operating mode is switched to the user throughput increase mode 133 for giving priority to increasing the user throughput.

Then, upon receiving the direction of arrival and the antenna receive power (g(θ)+P(t)[dB]) of each path from the DoA detection/signal combining unit 107, the sector reverse-directivity filtering unit 111 cancels the antenna gain component g(θ) from the power level of the signal received at the antenna end (referred to as the "antenna receive power"), using the reverse pattern described in the conversion table, and outputs a spatial signal power level P(t).

The directions of arrival and the spatial signal powers output from the sector reverse-directivity filtering unit 111 are supplied to the delay profile generator 115. The delay profile generator 115 produces and outputs a delay profile representing the time delays of the multiple paths 1 through i. The maximum power path selector 117 selects the maximum power path with the highest signal power from the combinations of the directions of arrival and spatial signal powers defined by the delay profile. The downlink main beam direction control unit 119 controls the direction of the beam to be transmitted for user 1, based on the direction of arrival of the maximum power path selected by the maximum power path selector 117, by sending an instruction to the downlink weighting unit 121.

Based on the instruction from the downlink main beam direction control unit 119, the downlink weighting unit 121 produces weighting parameters for adjusting the phases of the antennas 101-1 through 101-i. The user data item 125 is multiplied by each of the generated parameters to produce user data item 126 to be transmitted to the antennas 101-1 through 101-i. The user data item is multiplexed with other user data items at the user multiplexing units 127-1 through 127-i. The combined data item is supplied to the antennas 101-1 through 101-i, via the associated duplexers 103-1 through 103-i.

The above-described operations are the same as those described in the first embodiment. The maximum power path is selected, and the DoA information of the selected path is supplied as the initial value to the downlink main beam direction control unit 119. The downlink main beam direction control unit 119 supplies the path number of the selected path as the initial value to the multi-user operation unit 137, directing the mode switch. Simultaneously, the mode switching instruction is supplied from the upper layer 129 to the statistical estimation unit 139 and the optimization control unit 141.

Simultaneously with the selection of the maximum power path at the maximum power path selector 117, the downlink transmit information processing unit 135 calculates a needed radiated power $Rad_{usr}$ of user 1 for each of the paths 1 through i, based on equation (1). The radiated power $Rad_{usr}$ is calculated making use of the uplink information, which consists of the directions of arrival $DoA_{usr}$ and sector antenna gain and the spatial signal powers $P_{usr}$ defined in the delay profile, as well as of the downlink user information K stored in advance and the uplink amplification value $TPC_{mod}$ directed to transmit power control:

$$Rad_{usr} = \frac{K*TPC_{mod}}{P_{usr}}*g(DoA_{usr}) \tag{1}$$

where K is the downlink user information, such as the transmission scheme or the transmission rate, of each user. For example, as to the modulation protocol, when the 4PSK (phase shift keying) is set to 1, then 16APSK (amplitude and phase shift keying) is set to 4. In equation (1), g() denotes the directional gain of the sector antenna. The transmit power amplification value $TPC_{mod}$ is acquired constantly from the upper layer 129.

In this manner, the downlink transmit information processing unit 135 calculates a power level to be radiated ("radiated power level") using the downlink transmit information (or user information), in addition to the received uplink information. In this embodiment, it is necessary to make the spatially radiated power uniform in order to increase the user throughput per sector. For this reason, the radiated power is calculated for each path for each of the users 1 through i.

The multi-user operation unit 137 receives the DoA (direction of arrival) and the associated $Rad_{usr}$ (the estimated radiated power) of each path, and estimates a spatial distribution of cumulative radiated powers of all the users 1 through i over a sector by stepsize of Δθ (DoA stepsize). An example of the spatial distribution of the cumulative radiated powers by stepsize of Δθ in the direction of arrival over the sector is illustrated in FIG. 7.

Then, the statistical estimation unit 139 obtains a radiated power distribution for each direction of arrival, from the spatial distribution of the cumulative radiate powers supplied from the multi-user operation unit 137. Based on the radiated power distribution of each direction, the statistical estimation unit 139 estimates statistical values described below.

FIG. 8 is a graph showing how the statistical estimation is performed using the radiated power distribution of each transmit direction (or each DoA). This graph represents a histogram of the radiated power level per unit angle, in which the midpoints of the rectangles are connected. By performing this statistical process for all the directions of arrival, the frequency of occurrence is accumulated.

Based on this graph, the statistical estimation unit 139 calculates the average radiated power $Rad_{ave}$ and the

standard deviation σ, based on equations (2) and (3), respectively.

$$Rad_{ave} = \frac{1}{(SECT / \Delta\theta)} \sum_{i=\Delta\theta}^{SECT(step:\Delta\theta)} Rad(\theta_i) \qquad (2)$$

$$\sigma = \sqrt{\frac{1}{(SECT / \Delta\theta)} \sum_{i=\Delta\theta}^{SECT(step:\Delta\theta)} (Rad(\theta_i) - Rad_{ave})^2} \qquad (3)$$

where SECT is an angular area covered by the sector antenna, and Rad (θi) is cumulative radiated power calculated from the sum of $Rad_{usr}$ shown in FIG. 7.

The average radiated power $Rad_{ave}$ and the standard deviation σ are referred to as "statistical values", and are indicated in the graph of FIG. 8.

As is expressed by equation (2), $Rad_{ave}$ is obtained by summing up the DoA radiated power Rad(θ i) for all the directions and dividing the summation by the number of points (SECT/Δθ) in the sector. The number of points is obtained by dividing the sector angle by the step angle Δθ. The standard deviation σ is calculated using the average radiated power.

The statistical estimation unit 139 determines whether the optimization process is required, using either one of the two methods described below. The first method is determination based on the standard deviation σ, and the second method is determination based on a prescribed offset margin with respect to the average of the radiated power.

Only one of these two estimation methods may be used, or alternatively, both methods may be alternately used under switching instructions from the upper layer 129.

The first method uses a threshold value of the standard deviation, and the optimization process for adjusting the beam transmit direction is performed when the directional distribution of the radiated power varies on average. If the calculated standard deviation σ is smaller than the threshold req(σ) designated by the upper layer (σ<req(σ)), the statistical estimation unit 139 instructs the downlink main beam direction control unit 119 to maintain the current beam direction of each user. If the standard deviation σ is greater than or equal to the threshold req(σ) (σ≥req(σ)), the statistical estimation unit 139 instructs the optimization control unit 141 to execute the optimization algorithm.

The second method is a method for performing optimization (or adjusting the transmit direction of a specific user) when a local peak of radiated power is detected in a certain direction within the sector. In this case, the offset value α is supplied from the upper layer 129 in advance.

If the radiated power in direction θ i is smaller than the offset margin req((Rad$_{ave}$+α), and if Rad(θi)<req (Rad$_{ave}$+α) stands for all the transmit directions, then the statistical estimation unit 139 instructs the downlink main beam direction control unit 119 to maintain the current beam direction of each user. If Rad(θi)≥req(Rad$_{ave}$+α), the statistical estimation unit 139 instructs the optimization control unit 141 to execute the algorithm.

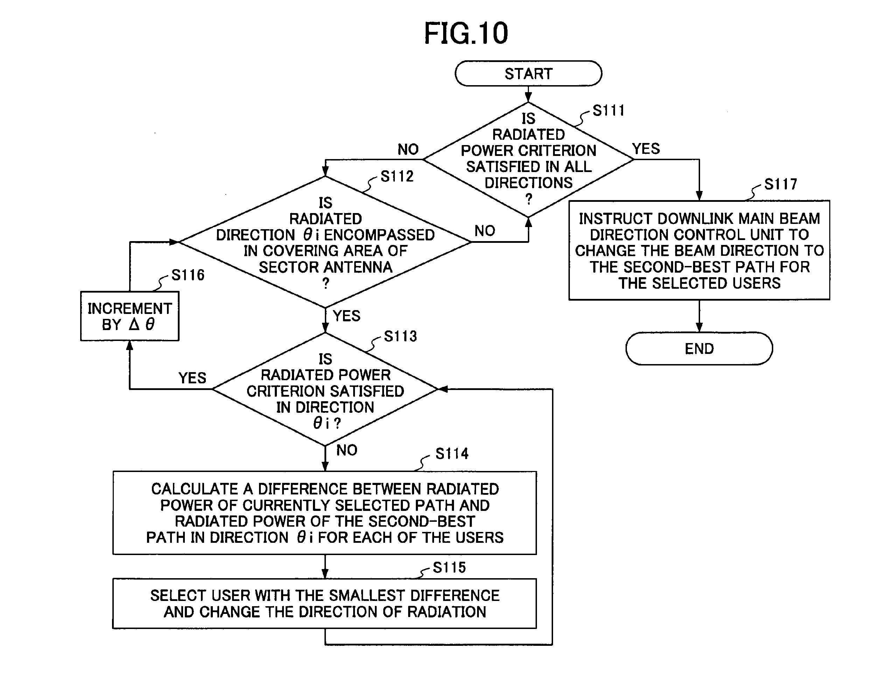

The optimization control unit 141 executes the optimization algorithm based on the estimation result of the statistical estimation unit 139. After the optimization, the optimization control unit 141 instructs the downlink main beam direction control unit 119 to adjust the transmit direction of a specific user. When the above-described first method is employed, the optimization control unit 141 executes the optimization algorithm illustrated in FIG. 9. When the above-described second method is employed, the optimization control unit 141 executes the optimization algorithm illustrated in FIG. 10.

FIG. 9 is a flowchart showing the operations carried out by the optimization control unit 141 when the above-described first method using the standard deviation is employed. The optimization control unit 141 has received the path number from the downlink main beam direction control unit 119, as well as the user path information in conjunction with the graphs of FIG. 7 and FIG. 8, prior to starting the operations shown in FIG. 9.

In step S101, it is determined whether the radiated power criterion is satisfied in all the transmit directions. If σ<req(σ) does not hold for all the transmit directions (NO in S101), it is determined in step S102 whether the currently processed direction θi resides in the range of the covering area of the sector antenna. For example, it is determined whether the current direction θi resides in the range from -30° to 30° (-30°<θi<30°) of the 60-degree sector antenna. If the current angle θ i is out of the range, then the process returns to step S101. If the current angle θi resides in the range, the process proceeds to step S103.

In step S103, the difference between the radiated power of the currently selected path and the radiated power of the second-best path in direction θ i is calculated for each of the users. This difference represents an increase in transmit power to be induced when the second-best path is selected. The currently selected path is one corresponding to the path number designated by the downlink main beam direction control unit 119.

Then, in step S104, the user with the smallest radiated power difference is chosen, and the currently selected path is replaced by the second-best path.

Then, in step S105, a step angle Δθ is added to the currently processed angle in direction θi, and the process returns to step S102 to repeat the steps S102 through S105 until the current direction θi is out of the range.

The operations in steps S102 through S105 are carried out for every step angle Δθ in the entire range of the sector angle, and the beam direction to be transmitted is changed for a single user at each angle θi.

If it is determined in step S101 that the radiated power criterion is satisfied in all the directions, the process proceeds to step S106 to instruct the downlink beam direction control unit 119 to change the current beam direction for the user selected in step S104 to the second-best path.

Based on the instruction from the optimization control unit 141, the downlink main beam direction control unit 119 supplies the transmit direction of the second-best path and the amount of transmit power adjustment of the selected user (for example, user 1 shown in FIG. 6) to the downlink weighting unit 121. At the same time, the downlink main beam direction control unit 119 provides the updated path number of user 1 to the multi-user operation unit 137. The downlink weighting unit 121 generates an updated weighting parameter set based on the updated transmit direction and the power adjusting amount.

FIG. 10 is a flowchart showing the operations carried out by the optimization control unit 141 when the above-described second method using the offset margin is employed. In step S111, it is determined whether the radiated power criterion is satisfied in all the transmit directions, as in S101 of FIG. 9. If the criterion is not satisfied for all the directions, that is, if $Rad(\theta i) > req(Rad_{ave} + \alpha)$ stands for at least one direction (NO in S111), it is determined in step S112 whether the currently processed direction θi resides in the range of the covering area of the sector antenna. If the current angle θi resides in the range (YES in S112), the process proceeds to step S113.

In step S113, it is determined whether the radiated power criterion is satisfied for the current direction θi. If the criterion is not satisfied for the current direction (NO in step S113), the process proceeds to step S114.

In step S114, the difference between the radiated power of the currently selected path and the radiated power of the second-best path (or increase in transmit power to be induced when the second-best path is selected) in the current direction θi is calculated. The currently selected path is one corresponding to the path number designated by the downlink main beam direction control unit 119.

Then, in step S115, the user with the smallest radiated power difference is chosen, the currently selected path is replaced by the second-best path, and the process returns to step S113.

If, in step S113, it is determined that the criterion is satisfied (YES in S113), the process proceeds to step S116, in which a step angle Δθ is added to the currently processed angle in direction θi. Then, the process returns to step S112 to repeat the steps S112 through S116 until the current direction θi is out of the range. If it is determined in step S112 that the current direction θi is out of the range (NO in S112), the process returns to step S111.

The operations in steps S112 through S116 are carried out for every step angle Δθ in the entire range of the sector angle, and the beam direction to be transmitted is changed for a single user at each angle θi.

If it is determined in step S111 that the radiated power criterion is satisfied in all the directions, the process proceeds to step S117 to instruct the downlink beam direction control unit 119 to change the current beam direction for the user selected in step S115 to the second-best path. The subsequent operations of the downlink main beam direction control unit 119 and the downlink weighting unit 121 are the same as those explained in conjunction with FIG. 9.

The steps S112 through S116 are performed for all the directions in this sector. Then, it is determined in step S111 whether the criterion is satisfied for all the directions. This is because changing the transmit direction from the currently processed direction θi to (θi-Δθ) may cause the (θi-Δθ) direction that has already satisfied the criterion to deteriorate. To avoid this, it has to be finally determined whether the criterion is satisfied in all the directions.

FIG. 5B is a signal power distribution of the 60-degree sector antenna when the above-described optimization is carried out in the user throughput increase mode. The lengths of the solid arrows, each representing the current density radiated in the air, become substantially uniform, as compared with FIG. 5A. By performing the optimization illustrated in either FIG. 9 or FIG. 10, the beam transmit direction of a certain user with degraded quality is changed or adjusted, and the user allocation is optimized. Consequently, the reduction of the user throughput due to local spot degradation can be prevented.

In this manner, a spatial direction of arrival and a spatial signal power level immediately before a signal is received at the antenna are estimated from the DoA and the power of the received signal, using the directional antenna gain pattern information. Depending on the transmit power reduction mode or the throughput increase mode, beam forming is adaptively controlled by adjusting the transmit direction and the transmit power.

With the beam forming adaptive control apparatus of the first embodiment shown in FIG. 3, the DoA detection/ signal combining unit 107 detects the direction of arrival from a user signal separated from signals received at the adaptive array antenna (consisting of sector antennas), and outputs the power level of the received signal based on the direction of arrival. When the user throughput increase mode 133 is selected, the sector reverse-directivity filtering unit 111 removes the antenna gain from the power level of the received signal to estimate the spatial signal power level. The delay profile generating unit 115 generates a multi-path delay profile based on the directions of arrival and the calculated spatial signal powers.

The maximum power path selector 117 selects the path with the highest power level. The downlink beam direction control unit 119 generates an instruction for changing the detected direction of arrival of the selected path into a new transmit direction. The downlink weighting unit 121 produces parameters for adjusting the antenna phases based on the instruction.

With the beam forming adaptive control apparatus of the second embodiment shown in FIG. 6, when the user throughput increase mode 133 is selected, the downlink transmit information unit 135 calculates radiated powers (see Equation (1)) of the multiple paths 1 through i of each user, using uplink receive information and downlink transmit information. The multi-user operation unit 137 accumulates the radiated powers of all the users to produce a spatial distribution of the cumulative radiated powers over the sector, as illustrated in FIG. 7.

The statistical estimation unit 139 statistically evaluates the necessity of the optimization process, from the viewpoint of standard deviation or offset from the average of the radiated power, using a radiated power distribution of each direction (illustrated in FIG. 8), which is created from the spatial distribution of the cumulative radiated powers. If optimization is required, the optimization control unit 141 determines which user path is to be adjusted in transmit direction based on comparison between the currently selected path and the second-best path of each user. The transmit direction of only one user may be adjusted for each direction $\theta i$ (FIG. 9), or alternatively, the transmit direction may be adjusted without restriction in the number of users (FIG. 10).

The present invention is not limited to the above-described first and second embodiments, and there are many substitutions and modifications.

For example, the structures shown in FIG. 3 and FIG. 6 may be realized by functional blocks of a digital signal processor using a software program, or alternatively, at least a part of the process may be realized by dedicated hardware.

In the embodiments the sector reverse-directivity filtering unit 111 starts canceling the antenna gain from the received signal in response to the mode switching instruction from the upper layer 129. However, each base station may be configured to produce a mode switching instruction (to be supplied to the mode switch 109) based on empirical transaction data in the cell or the sector to which the service is provided by this base station.

In this case, the base station may have a scheduling table (not shown) in which a mode switching schedule is recorded according to the season, the month, the day and the time. In this manner, the mode switching can be performed either externally or internally. Furthermore, an additional mode switching instruction may be used to adjust the beam direction to be transmitted based on the received signal power.

In the embodiment, the sector reverse-directivity filtering unit 111 carries out cancellation of antenna gain using a reverse pattern of the antenna gain registered in advance for each direction. However, antenna gains themselves may be recorded in the conversion table. In either case, the sector reverse-directivity filtering unit 111 estimates a spatial signal power level from the received signal based on the detected direction of arrival.

In the first embodiment, the beam direction to be transmitted is determined by the combination of the delay profile generating unit 115, the maximum power path selector 117, and the downlink main beam direction control unit 119. However, the present invention is not limited to this arrangement, and any functional structure can be employed as long as the beam direction to be transmitted is determined based on the spatial signal power supplied from the sector reverse-directivity filtering unit 111.

Similarly, in the second embodiment, the beam direction to be transmitted is determined by the combination of the multi-user operation unit 137, the statistical estimation unit 139, and the optimum control unit 141. However, the present invention is not limited to this arrangement, and any functional structure can be employed as long as the beam transmit direction of a specific user (mobile station) is determined based on the radiated power estimated from the uplink receive information and downlink transmit information.

Although in the embodiment the upper layer 129 is realized by the RNC for monitoring multiple base stations, the present invention is not limited to this arrangement. The upper layer 129 can be implemented by any arrangement as long as it can monitor the throughput of each sector constantly or all the time and output the mode switching instruction.

In the above-described embodiments, the downlink weighting unit 121 produces weighting parameters based on the updated transmit direction and the adjusting amount of the transmit power supplied from the downlink main beam direction control unit 119. However, the present invention is not limited to this example, and weighting parameters can be generated using a beam steering or mull steering technique.

Although, in the embodiments, the optimization control unit 141 determines the user to be reallocated and the updated transmit direction, then informs to the downlink main beam direction control unit 119 when the prescribed radiated power criterion is satisfied, the present invention is not limited to this arrangement. For example, if the system is configured such that the number of repetitions of steps S102 through S105 shown in FIG. 9 is designated by the upper layer 129, the user to be reallocated can be determined so as to perform beam forming at the end of the designated repetitions.

The adaptive mode switching of the present invention can be applied to fixed multi-beam forming to control the transmit direction of the beam.

Application of the present invention is not limited to the single-carrier CDMA schemes, but can be applied to general multi-carrier CDMA schemes.

**Claims**

1. A beam forming adaptive control method comprising the steps of:

   receiving a plurality signals at a plurality of sector antennas from a plurality of mobile stations and separating each of the signals for each of the mobile stations, the signals being transmitted in a code division multiple access scheme;
   estimating direction of arrival and the received power level of each path of the separated signal;
   estimating spatial signal power level from the received power level based on the respective direction of arrival and sector antenna gain; and
   determining a beam transmit direction based on the estimated received spatial signal power.

2. The method of claim 1, further comprising the step of:

   adjusting a current beam transmit direction to the determined beam direction based on the received signal powers.

3. The method of claim 1, wherein the beam transmit direction is determined by selecting a path with the maximum spatial signal power.

4. The method of claim 1, wherein the determination of the beam transmit direction includes the steps of:

   calculating a radiated power level of each of a plurality of paths, based on the directions of arrival, the spatial signal power levels, and downlink transmit information;
   accumulating the radiated power levels of all the mobile stations to produce a spatial distribution of cumulative radiated powers;
   estimating a statistical value as to the cumulative radiated power distribution, and comparing the statistical value with a reference value; and
   determining for which mobile station the beam transmit direction is to be adjusted depending on the comparison result.

5. The method of claim 4, wherein the mobile station whose beam direction is to be adjusted is determined based on a difference between a first radiated power level of a currently selected path and a second radiated power level of a second-best path.

6. The method of claim 4, wherein the statistical value is a standard deviation of the cumulative radiated powers, and the mobile station whose beam direction is to be adjusted is determined for each step angle over an area covered by one of the sector antennas.

7. The method of claim 4, wherein the statistical value is an average of the cumulative radiated powers and an offset calculated from the average or/and standard deviation, and one or more mobile stations whose beam direction is to be adjusted are determined for each step angle over an area covered by one of the sector antennas.

8. A beam forming adaptive control apparatus comprising:

a plurality of sector antennas configured to receive signals from a plurality of mobile stations, the signals being transmitted in a code division multiple access scheme;

a signal separator configured to separate each of the signals for each of the mobile stations;

a first computing unit configured to calculate directions of arrival and received power level of each path of the separated signal;

a second computing unit configured to calculate spatial signal power level from the received power level based on the associated direction of arrival; and

a beam direction determining unit configured to determine a beam direction to be transmitted based on the spatial signal power level.

9. The apparatus of claim 8, wherein the beam direction determining unit includes:

a third computing unit configured to calculate a radiated power level of each of the multiple paths of each mobile station, based on the direction of arrival, the spatial signal power level, and downlink transmit information about each mobile station;

an accumulating unit configured to accumulate the radiated power level of all the mobile stations to produce a spatial distribution of cumulative radiated powers;

a statistical estimation unit configured to estimate whether adjustment of the beam transmit direction is required, using a statistical value as to the cumulative radiated powers; and

an optimization control unit configured to determine for which mobile station the beam transmit direction is to be adjusted depending on the estimation result of the statistical estimation unit.

# FIG.1 PRIOR ART

# FIG.2

PATH 1   PATH 2

PATH 1: SPATIAL SIGNAL POWER $\alpha$ [dB]
ANTENNA RECEIVE POWER $\alpha + g(x)$[dB]

PATH 2: SPATIAL SIGNAL POWER $\beta$ [dB]
ANTENNA RECEIVE POWER $\beta + g(y)$[dB]

−3[dB]

−BW/2     BW/2

$g(\theta)$

ANTENNA GAIN [dB]

−30   −20   −10   0   10   20   30

ANGLE [deg]

EP 1 608 084 A2

# FIG.3

EP 1 608 084 A2

# FIG.4

# FIG.5A

# FIG.5B

# FIG.6

EP 1 608 084 A2

101-i
103-i
127-i
126
123
125
DUPLEX
DUPLEX
101-1
DUPLEX
103-1
127-1

DOWNLINK
WEIGHTING  121

DOWNLINK
TRANSMIT
INFORMATION
PROCESSING  135

MULTI-USER
OPERATION  137

STATISTICAL
ESTIMATION  139

OPTIMIZATION
CONTROL  141

105-i
105-1

DoA
DETECTION
/SIGNAL
COMBINE  107

109

113

DELAY
PROFILE
GENERATION  115

MAXIMUM
POWER
PATH
SELECTION  117

DOWNLINK
MAIN BEAM
DIRECTION
CONTROL  119

SECTOR
REVERSE-
DIRECTIVITY
FILTERING  111

FROM
UPPER LAYER

USER i

USER 2

USER 1

TRANSMIT
POWER
REDUCTION
MODE  131

USER
THROUGHPUT
INCREASE
MODE  133

UPPER
LAYER  129

# FIG.7

# FIG.8

# FIG.9

START

IS RADIATED POWER CRITERION SATISFIED IN ALL DIRECTIONS ? — S101

NO → (to S102)

YES → INSTRUCT DOWNLINK MAIN BEAM DIRECTION CONTROL UNIT TO CHANGE THE BEAM DIRECTION TO THE SECOND-BEST PATH FOR THE SELECTED USERS — S106 → END

IS RADIATED DIRECTION $\theta i$ ENCOMPASSED IN COVERING AREA OF SECTOR ANTENNA ? — S102

NO → (back to S101)

YES → CALCULATE A DIFFERENCE BETWEEN RADIATED POWER OF CURRENTLY SELECTED PATH AND RADIATED POWER OF THE SECOND-BEST PATH IN DIRECTION $\theta i$ FOR EACH OF THE USERS — S103

SELECT USER WITH THE SMALLEST DIFFERENCE AND CHANGE THE DIRECTION OF RADIATION — S104

INCREMENT BY $\Delta \theta$ — S105

EP 1 608 084 A2

# FIG.10

START

S111
IS RADIATED POWER CRITERION SATISFIED IN ALL DIRECTIONS ?

NO → S112

YES → S117
INSTRUCT DOWNLINK MAIN BEAM DIRECTION CONTROL UNIT TO CHANGE THE BEAM DIRECTION TO THE SECOND-BEST PATH FOR THE SELECTED USERS

END

S112
IS RADIATED DIRECTION $\theta$i ENCOMPASSED IN COVERING AREA OF SECTOR ANTENNA ?

NO

YES

S116
INCREMENT BY $\Delta\theta$

S113
IS RADIATED POWER CRITERION SATISFIED IN DIRECTION $\theta$i ?

YES

NO → S114
CALCULATE A DIFFERENCE BETWEEN RADIATED POWER OF CURRENTLY SELECTED PATH AND RADIATED POWER OF THE SECOND-BEST PATH IN DIRECTION $\theta$i FOR EACH OF THE USERS

S115
SELECT USER WITH THE SMALLEST DIFFERENCE AND CHANGE THE DIRECTION OF RADIATION

EP 1 608 084 A2